## Europäisches Patentamt

## European Patent Office

## Office européen des brevets

(19)

(11) Veröffentlichungsnummer: **0 070 471**
**B1**

(12) **EUROPÄISCHE PATENTSCHRIFT**

(45) Veröffentlichungstag der Patentschrift:
30.04.86

(51) Int. Cl.⁴: **G 05 D 23/24, G 05 D 23/20**

(21) Anmeldenummer: **82106140.5**

(22) Anmeldetag: **08.07.82**

(54) **Verfahren zur Ermittlung des Sollwertes der Vor- oder Rücklauftemperatur für ein Vor- oder Rücklauftemperaturregelsystem einer Zentralheizungsanlage und elektronische Schaltungsanordnung zur Durchführung des Verfahrens.**

(30) Priorität: **22.07.81 DE 3128991**

(43) Veröffentlichungstag der Anmeldung:
**26.01.83 Patentblatt 83/4**

(45) Bekanntmachung des Hinweises auf die Patenterteilung:
**30.04.86 Patentblatt 86/18**

(84) Benannte Vertragsstaaten:
**AT CH DE FR GB LI**

(73) Patentinhaber: **Siemens Aktiengesellschaft, Berlin und München Wittelsbacherplatz 2, D-8000 München 2 (DE)**

(72) Erfinder: **Stark, Reinhard, Dipl.-Ing., Wodanstrasse 20, D-8500 Nürnberg (DE)**

(56) Entgegenhaltungen:
**EP - A - 0 012 936**
**EP - A - 0 049 215**
**EP - A - 0 060 801**
**DE - A - 2 219 897**
**DE - B - 1 105 584**
**FR - A - 2 077 153**
**FR - A - 2 449 923**

**POLYTECHNISCH TIJDSCHRIFT ELECTROTECHNIEK ELECTRONICA, Band 33, Nr. 7, Juli 1978, Seiten 373-381, Den Haag (NL); H.TH.KLEIN WOLTERINK:**
**"Energiebesparing en besturing van de huisinstallatie met een microprocessor"**

## Beschreibung

Die Erfindung betrifft ein Verfahren zur Ermittlung des Sollwertes der Vor- oder Rücklauftemperatur für ein Vor- oder Rücklauftemperaturregelsystem einer Zentralheizungsanlage mit von einem flüssigen Wärmeträger durchströmten Wärmetauschern in den zu beheizenden Räumen, wobei der Sollwert als Summe einer einstellbaren konstanten ersten Größe, einer der Regeldifferenz der Raumtemperatur eines temperaturbestimmenden Raumes (Pilotraum) proportionalen zweiten Größe und einer aus dem Produkt aus einer Proportionalitätskonstanten und der Differenz eines einstellbaren Festwertes und der Außentemperatur gebildeten dritten Größe ermittelt wird.

Die Erfindung betrifft ferner eine elektronische Schaltungsanordnung zur Durchführung des Verfahrens, mit einem Differenzverstärker zur Bildung der der Regeldifferenz der Raumtemperatur des temperaturbestimmenden Raumes (Pilotraum) proportionalen zweiten Größe, mit einem ersten Differenzwertbildner, dessen einem Eingang der einstellbare Festwert und dessen Subtraktionseingang der Außentemperaturwert zugeführt ist, und einem nachgeschalteten Multiplizier glied, dessen zweiten Multiplikationseingang die Proportionalitätskonstante zugeführt ist, zur Bildung der dirtten Größe sowie mit einem einstellbaren Gleichspannungsgeber zur Vorgabe der ersten Größe, wobei die drei Größen den Additionseingängen eines Summiergliedes zugeführt sind, an dessen Ausgang der Sollwert der Vor- bzw. Rücklauftemperatur zur Verfügung steht.

Ein derartiges Verfahren und eine solche Schaltungsanordnung ist im Heizungsanlagenbau unter dem Begriff "Pilotraumregelung mit Außentemperatur Aufschaltung" bekannt, z.B. wie in EP-A1-00 49 215 und EP-A1-00 60 801 beschrieben.

Hierbei wird der Sollwert der Vorlauftemperatur $\vartheta_{VS}$ - dies gilt auch für die Rücklauftemperatur - durch den folgenden mathematischen Zusammenhang beschrieben:

$$\vartheta_{VS} = P1 + (\vartheta_{RS} - \vartheta_{R1}) \ '' \ V + K \ '' \ (P2 - \vartheta_A) \ (1)$$

wobei P1 = einstellbare konstante Größe
$\vartheta_{RS}$ = Raumtemperatursollwert (Pilotraum)
$\vartheta_{RI}$ = Raumtemperaturistwert (Pilotraum)
V = eingestellte Verstärkung
K = Proportionalitätskonstante
P2 = einstellbarer Festwert
$\vartheta_A$ = Außentemperatur
ist.

Vorzugsweise sind hierbei die einstellbare konstante Größe P1 und der einstellbare Festwert P2 gleich und entsprechen dem Raumtemperatursollwert $\vartheta_{RS}$.

Gegenüber der ebenfalls üblichen Pilotraumregelung ohne Außentemperaturaufschaltung, bei der lediglich die ersten beiden Terme P1 und $(\vartheta_{RS} - \vartheta_{R1}) \ '' \ V$ der

obigen Formel ausgewertet werden, weist die Pilotraumregelung mit Außentemperaturaufschaltung bereits einen erheblichen Vorteil auf; denn die eingestellte Verstärkung V kann nicht zu hoch gewählt werden, um Schwingungen des Regelsystems zu vermeiden. Daraus ergibt sich bei der Pilotraumregelung ohne Außentemperaturaufschaltung zwangsläufig über den ganzen Regelbereich eine gewisse bleibende Regelabweichung der Raumtemperatur durch den Einfluß der Störgrössen, deren wichtigste die Außentemperatur $\vartheta_A$ darstellt.

Bei der Pilotraumregelung mit Außentemperaturaufschaltung entspricht die Proportionalitätskonstante K des dritten Terms $K \ '' \ (P2 - \vartheta_A)$ in obiger Formel der Steilheit der Heizkurve bei den ebenfalls im Heizungsanlagenbau eingesetzten witterungsgeführten Regelungen, bei denen der Sollwert der Vor- oder Rücklauftemperatur $\vartheta_{VS}$ anhand von durch den Betreiber auswählbaren Heizkurven, die einen funktionalen Zusammenhang zwischen dem Sollwert der Voroder Rücklauftemperatur $\vartheta_{VS}$ und der Außentemperatur $\vartheta_A$ darstellen, ausgewählt wird. Bei der Pilotraumregelung mit Außentemperaturaufschaltung wird der Sollwert der Vor- oder Rücklauftemperatur $\vartheta_{VS}$ ganz wesentlich durch den dritten Term $K \ '' \ (P2 - \vartheta_A)$ in obiger Formel bestimmt, wobei der zweite Term $(\vartheta_{RS} - \vartheta_{RI}) \ '' \ V$ nur noch zur Ausregelung von Abweichungen von der Heizkurve, die durch Wind, Feuchtigkeit, zusätzliche interne Wärmequellen hervorgerufen sein können, dient. Die Einstellung der Proportionalitätskonstanten K bleibt dem Benutzer überlassen und kann nur nach sehrlangwierigen Beobachtungen einigermaßen genau erfolgen, wobei es im allgemeinen sehr schwierig ist, eine Einstellung zu finden, die sowohl bei extrem niedrigen Außentemperaturen als auch bei relativ hohen Außentemperaturen zu einem befriedigenden Regelverhalten führt.

Der Erfindung liegt die Aufgabe zugrunde, ein Verfahren der eingangs genannten Art so weiterzubilden, daß die mit der Einstellung der Proportionalitätskonstanten K verbundenen Schwierigkeiten entfallen.

Der Erfindung liegt die weitere Aufgabe zugrunde, eine elektronische Schaltungsanordnung der eingangs genannten Art anzugeben, die die Ermittlung und Ersetzung der Proportionalitätskonstanten K vollautomatisch durchführt.

Die erstgenannte Aufgabe wird erfindungsgemäß dadurch gelöst, daß zu bestimmten Zeitpunkten der bisherige Wert der Proportionalitätskonstanten K durch einen neuen aktuellen Wert als Quotient aus einem ersten Differenzwert, gebildet aus dem aktuellen Sollwert $\vartheta_{VS}$ der vor- oder Rücklauftemperatur und der konstanten Größe, P1, und einen zweiten Differenzwert, gebildet aus dem einstellbaren Festwert P2, und der Außentemperatur $\vartheta_A$ ersetzt

wird, wenn sich das Vor- oder Rücklauftemperaturregelsystem in der diesem Zeitpunkt vorangehenden Zeitspanne zur Ermittlung der Proportionalitätskonstanten K in einem eingeschwungenen Zustand befindet.

Die weitere Aufgabe wird erfindungsgemäß dadurch gelöst, daß zusätzlich

a) ein weiterer Differenzwertbildner vorgesehen ist, an dessen erstem Eingang der Sollwert der Vor- oder Rücklauftemperatur und an dessen zweitem Eingang das Ausgangssignal des Gleichspannungsgebers ansteht,

b) ein Dividierglied vorgesehen ist, dessen erster Eingang mit dem Ausgang des zweiten Differenzwertbildners und dessen zweiter Eingang mit dem Ausgang des ersten Differenzwertbildners verbunden ist,

c) ein triggerbarer elektronischer Speicher für das Ausgangssignal des Dividiergliedes vorgesehen ist mit einem Übergab takteingang, an den in konjunktiver Verknüpfung das Ausgangssignal eines Zeitsignalsgebers und ein für den Einschwingzustand des Vor- oder Rücklauftemperaturregelsystems charakteristisches Signal geführt ist.

Die Erfindung geht von der Erkenntnis aus, daß im eingeschwungenen Zustand in der eingangs angegebenen Formel das Glied $\vartheta_{RS}$ - $\vartheta_{RI}$ des zweiten Terms zu Null werden soll. Daraus ergibt sich für die Proportionalitätskonstante K der Zusammenhang

$$K = (\vartheta_{VS} - P1) / (P2 - \vartheta_A)\ (2)$$

Darüber hinaus gründet sich die Erfindung auf die Einsicht, daß - würde kontinuierlich die Proportionalitätskonstante K ermittelt und in die Bestimmung des Sollwerts der Vor- oder Rücklauftemperatur $\vartheta_{VS}$ einbezogen dies nichts andrres als eine unendlich große Verstärkung bedeuten würde, was zu einer ungedämpften Schwingung des Temperaturregelsystems führen würde. Aus diesem Grunde ist es wesentlich, daß die Bestimmung der Proportionalitätskonstanten K diskontinuierlich nur zu bestimmten Zeitpunkten erfolgt, in denen zusätzlich die Forderung erfüllt sein muß, daß sich das Temperaturregelsystem in einem eingeschwungenen Zustand befindet.

Es ist vorteilhaft, wenn jeweils zwei aufeinanderfolgende Zeitpunkte durch gleiche Zeitabstände getrennt sind. Damit erfolgt die Ermittlung der Proportionalitätskonstanten K periodisch, also beispielsweise täglich zu einem bestimmten Zeitpunkt.

In einer alternativen Ausführungsform sind die Zeitpunkte jeweils an den Augenblick der Unterschreitung eines Grenzwertes der Außentemperatur gebunden. Damit ist die Vorgabe eines adäquaten Sollwertes der Vor- oder Rücklauftemperatur $\vartheta_{VS}$ auch in dem besonders kritischen Fall eines starken Absinkens der Außentemperatur gewährleistet. Solche durch die Außentemperatur bestimmte Zeitpunkte können auch zusätzlich zu den Zeitpunkten mit gleichem Zeitabstand hinzukommen. Dies gestattet eine besonders flexible und den Anforderungen des Vor- oder Rücklaufstemperaturregelsystems entsprechende Anzahl von Neubestimmungen der Proportionalitätskonstante K.

In einer bevorzugten Ausführungsform erfolgt dies dadurch, daß der Zeitsignalgeber einen einstellbaren Taktgenerator sowie ein Grenzwertglied, an dessen Eingang der Außentemperaturwert ansteht, aufweist, deren Ausgänge in disjunktiver Verknüpfung den Ausgang des Zeitsignalgebers bilden. Das Grenzwertglied gibt hierbei im Augenblick der Unterschreitung seines einstellbaren Grenzwertes einen ""Taktimpuls" ab, durch den ein neuberechneter Wert der Proportionalitätskonstanten K zur Verfügung gestellt wird. Dies stellt eine. besonders aufwandsarme Ausführung des Zeitsignalgebers dar.

Die Schaltungsanordnung kann durch die Funktionen eines Mikrocomputers realisiert sein. Damit muß die erfindungsgemäße Schaltungsanordnung nicht aus einzelnen diskreten Funktionselementen aufgebaut werden, was fertigungstechnische Vorteile ermöglicht. Allerdings ist es in diesem Fall notwendig, die Eingangsgrößen der Schaltungsanordnung, also beispielsweise Soll- und Istwert der Raumtemperatur $\vartheta_{RS}$ und $\vartheta_{RI}$, die erste Größe P1 und den einstellbaren Festwert P2 in digitalisierter Form einzuspeisen. Der ausgangsseitige Sollwert der Vor- oder Rücklauftemperatur $\vartheta_{VS}$ muß zumindest dann in einen Analogwert gewandelt werden, wenn die Vor- oder Rücklauftemperaturregelung als analog arbeitendes System arbeitet.

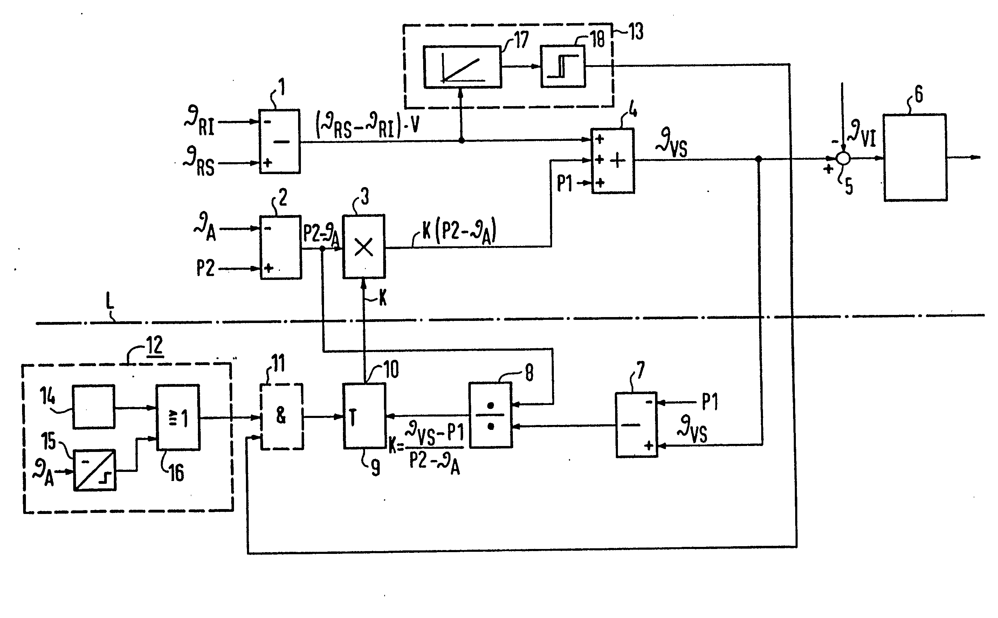

Die Erfindung wird im folgenden anhand eines in der Figur dargestellten Ausführungsbeispiels für eine Vorlauftemperaturregelung näher erläutert. Im Fall einer Rücklauftemperaturregelung sind die Verhältnisse analog.

Die in der Figur dargestellte Schaltungsanordnung wird durch die strichpunktierte Linie L in zwei Teile zerlegt. Der oberhalb der Linie L gelegene Schaltungsteil stellt eine bisher übliche Schaltungsanordnung zur Ermittlung des Sollwertes der Vorlauftemperatur $\vartheta_{VS}$ dar, wohingegen der unterhalb der Linie L gelegene Schaltungsteil zur Durchführung des erfindungsgemäßen Verfahrens dient.

Zunächst wird der oben liegende Schaltungsteil erläutert. Mit dem Bezugszeichen 1 ist ein Differenzverstärker bezeichnet, dessen einem Eingang (+) der Sollwert der Raumtemperatur $\vartheta_{RS}$ des temperaturbestimmenden Raumes (Pilotraum) und dessen Subtraktionseingang (invertierendem Eingang) (-) der Istwert der Raumteperatur $\vartheta_{RI}$ zugeführt ist. Der Istwert der Raumtemperatur $\vartheta_{RI}$ kann durch einen elektrischen Temperatursensor, beispielsweise einen temperaturabhängigen Widerstand oder ein Thermoelement, gewonnen sein, während der Sollwert der Raumtemperatur $\vartheta_{RS}$ an einem von der Betriebsspannung gespeisten Potentiometer abgegriffen sein kann. Der Differenzverstärker weist einen Verstärkungsfaktor V auf, so daß ausgangsseitig das Signal $(\vartheta_{RS} - \vartheta_{RI})$ V zur Verfügung steht das dem zweiten Term der eingangs dargestellten Formel (1) entspricht. Dieser Wert ist als zweite Größe bezeichnet.

Zur Bildung der dritten Größe, die dem dritten Term K . $(P2 - \vartheta_A)$ der eingangs dargestellten Formel (1) entspricht, dient ein Differenzwertbildner 2 sowie ein nachgeschaltetes Multiplizierglied 3. Der Differenzwertbildner 2 stellt ausgangsseitig den Wert $P2 - \vartheta_A$ zur Verfügung, da sein einer Eingang ( + ) den einstellbaren Festwert P2 und sein Subtraktionseingang (-) ein die Außentemperatur $\vartheta_A$ beschreibendes elektrisches Signal erhält. Dem einen Multiplikationseingang des Multipliziergliedes 3 ist das Ausgangssignal $P2 - \vartheta_A$ des Differenzwertbildners und dem zweiten Multiplikationseingang die Proportionalitätskonstante K zugeführt. Die Proportionalitätskonstante K ist beim Stand der Technik als ein, durch den Betreiber einstellbares elektrisches Gleichspannungssignal vorgegeben. Das Summatierglied 4 weist drei Addiereingänge ( + ) auf, wobei dem ersten als erste Größe P1, die von binem einstellbaren Gleichspannungsgeber, beispielsweise einem Potentiometer, abgeleitete Spannung zugeführt ist. Den beiden anderen Addiereingängen des Summationsgliedes 4 sind als zweite und dritte Größe $(\vartheta_{RS} - \vartheta_{RI})$ . V bzw. K . $(P2 - \vartheta_A)$ die Ausgangssignale des Differenzverstärkers 1 und des Multipliziergliedes 3 zugeführt. Am Ausgang des Summationsgliedes 4 steht der Sollwert der Vorlauftemperatur $\vartheta_{VS}$ zur Verfügung. Mit 5 ist die Subtraktionsstelle zur Bildung der Regelabweichung $\vartheta_{VS} - \vartheta_{VI}$ der Vorlauftemperatur bezeichnet, die in einem konventionellen Regler 6 zu einem Stellsignal für ein motorisch betriebenes Mischventil verarbeitet wird. Das motorisch betriebene Mischventil kann mit digitalen Signalen "Mischer auf" und "Mischer zu" angesteuert werden. Durch das Mischventil wird dem abgekühlten Heizungsrücklauf eine solche Menge von Heißwasser zugemischt, daß die Temperatur des damit entstehenden Vorlaufs möglichst gut dem Sollwert $\vartheta_{VS}$ entspricht.

Anstelle des beim Stand der Technik durch manuellen Eingriff vorgegebenen Wertes der Proportionalitätskonstanten K wird nunmehr durch den unterhalb der strichpunktierten Linie L dargestellten Schaltungsteil repetitiv zu bestimmten Zeitpunkten automatisch ein neuer aktueller wert der Proportionalitätskonstanten K errechnet. Zu diesem Zweck ist ein weiterer Differenzwertbildner 7 vorgesehen, dessen einem Eingang ( + ) der Sollwert der Vorlauftemperatur $\vartheta_{VS}$ und dessen Subtraktionseingang (-) die einstellbare erste Größe P1 zugeführt ist. Einem Dividierglied 8 ist zur Bildung der Proportionalitätskonstante K = $(\vartheta_{VS} - P1) / (P2 - \vartheta_A)$ einerseits das Ausgangssignal des Differenzwertbildners 2, andererseits das Ausgangssignal des weiteren Differenzwertbildners 7 zugeführt.

Das Ausgangssignal des Dividiergliedes 8 ist dem triggerbaren elektronischen Speicher 9 zugeführt, der dieses Signal jeweils dann übernimmt und an seinem Ausgang 10 zur Verfügung stellt, wenn an seinem Übergabetakteingang T ein Übernahmesignal eingegangen ist. Der Ausgang 10 des Speichers 9 ist mit dem einen Eingang des Multipliziergliedes 3 verbunden.

Am Übergabetakteingang T des triggerbaren Speichers 9, steht das Ausgangssignal eines UND-Gatters 11 an, dessen einer Eingang mit dem gestrichelt umrandeten Zeitsignalgeber 12 und dessen anderer Eingang mit einem den Einschwingungszustand des Reglers 6 auswertenden Funktionsglied 13 verbunden ist, wobei das Funktionsglied 13 ausgangsseitig H-Pegel immer dann aufweist, wenn der Regler 6 sich im eingeschwungenen Zustand befindet. Das Funktionsglied 13 besteht aus einem Integrator 17 sowie einem nachgeschalteten Grenzwertmelder 18, wobei der Integrator 17 an den Ausgang des Differenzverstärkers 1 angeschlossen ist und damit eingangsseitig mit dem Signal. $(\vartheta_{RS} - \vartheta_{R1})$ . V beaufschlagt ist. Dieses Signal stellt eine Art gedämpfter Schwingung um die Null-Linie dar, so daß im eingeschwungenen Zustand das Ausgangssignal des Integrators 17 auf einen niedrigen Pegel absinkt. Der Grenzwertmelder 18 dient der Überwachung dieses Pegels und liefert nur dann ein die konjunktive Verknüpfung durch das UND-Gatter 11 erfüllendes Ausgangssignal (H-Pegel), wenn der Pegel des Ausgangssignals des Integrators 17 unterhalb eines vorgegebenen niedrigen Grenzwertes des Grenzwertmelders 18 liegt, was das Vorliegen des eingeschwungenen Zustandes anzeigt.

Der Zeitsignalgeber 12 besteht aus einem Taktgenerator 14 mit einstellbarer, sehr niedriger Taktfrequenz, so daß beispielsweise einmal täglich ein Taktimpuls abgegeben wird. Darüber hinaus weist der Zeitsignalgeber 12 ein Grenzwertglied 15 zur Überwachung der Außentemperatur $\vartheta_A$ auf sehr niedrige Werte hin auf. Die Ausgänge des Taktgenerators 14 und des Grenzwertgliedes 15 sind an ein ODER-Gatter 16 angeschlossen, dessen Ausgang den Ausgang des Zeitsignalgebers 12 bildet. Das Ausgangssignal des Zeitsignalgebers ist damit aktiv (H-Pegel), wenn der Taktgenerator 14 einen Taktimpuls abgibt oder in dem Augenblick, wenn die Außentemperatur $\vartheta_A$ den Grenzwert des Grenzwertgliedes 15 unterschreitet oder beide Bedingungen erfüllt sind.

Darüber hinaus ist es sinnvoll, keinen neuen Wert der Proportionalitätskonstanten K bei hohen Außentemperaturen $\vartheta_A$ zuzulassen, da dabei der Term $(P2 - \vartheta_A)$ im Nenner der mathematischen Beziehung (2) für die Berechnung von K klein wird und damit eine hohe Ungenauigkeit entsteht. Dies kann dadurch geschehen, daß als UND-Gatter 11 ein Gatter mit drei UND-Eingängen verwendet wird, wobei der dritte Eingang mit dem Ausgang eines zusätzlichen Grenzwertgliedes für die Übervachung der Außentemperatur $\vartheta_A$ verbunden ist und der Grenzwert dieses zusätzlichen Grenzwertgliedes so gewählt ist, daß sein Ausgangssignal nur bei nicht zu hoher Außentemperatur $\vartheta_A$ die UND-Bedingungen erfüllt.

Damit wird durch die Wirkung des weiteren Differenzwertbildners 7 sowie des Dividiergliedes 8 ständig eine neue Proportionalitätskonstante K ermittelt und steht am Eingang des Speichers 9 an. Die Übernahme des aktuellen Wertes der Proportionalitätskonstante K erfolgt jedoch nur dann, wenn am Übergabetakteingang T des Speichers 9 ein Signal eingeht. Ein solches Signal kann wegen des UND-Gatters 11 überhaupt nur dann eingehen, wenn während des Vorhandenseins des Ausgangssignals des Zeitsignalgebers 12 sich der Regler 6 im eingeschwungenen Zustand befindet, da nur dann das Funktionsglied 13, das der Detektion des eingeschwungenen Zustandes des Reglers 6 dient, ein das UND-Gatter 11 öffnendes Signal liefert. In einem solchen Fall jedoch wird der aktuelle im eingeschwungenen Zustand ermittelte Wert der Proportionalitätskonstanten K in den triggerbaren Speicher 9 übernommen und dem Multiplizierglied 3 über den Ausgang des triggerbaren Speichers 9 zur Verfügung gestellt.

Vorzugsweise sind die einstellbare konstante Größe P1 und der einstellbare Festwert P2 gleich dem Sollwert der Raumtemperatur $\vartheta_{RS}$

## Patentansprüche:

1. Verfahren zur Ermittlung des Sollwertes $\vartheta_{VS}$ der Voroder Rücklauftemperatur für ein Vor- oder Rücklauftemperaturregelsystem (6) einer Zentralheizungsanlage mit von einem flüssigen Wärmeträger durchströmten Wärmetauschern in den zu beheizenden Räumen, wobei der Sollwer $\vartheta_{VS}$ als Summe einer einstellbaren konstanten ersten Größe (P1), einer der Regeldifferenz der Raumtemperatur eines temperaturbestimmenden Raumes (Pilotraum) proportionalen zweiten Größe $(\vartheta_{RS}\vartheta_{RI})$ . V und einer aus dem Produkt (K . (P2-$\vartheta_A$))aus einer Proportionalitätskonstanten (K), und der Differenz eines einstellbaren Festwertes (P2) und der Außentemeratur ($\vartheta_A$) gebildet dritten Größe ermittelt wird, dadurch gekennzeichnet, daß zu bestimmten Zeitpunkten der bisherige Wert der Proportionalitätskonstanten (K), durch einen aktuellen Wert als Quotient(($\vartheta_{VS}$ - P1) / (P2 -$\vartheta_A$), aus einem ersten Differenzwert ($\vartheta_{VS}$ - P1), gebildet aus dem aktuellen Sollwert i$\vartheta_{VS}$) der Vor- oder Rücklauftemperatur und der konstanten ersten Größe (P1), und einem zweiten Differenzwert (P2 -$\vartheta_A$), gebildet aus dem einstellbaren Festwert (P2) und der Außentemperatur ($\vartheta_A$), ersetzt wird, wenn sich das Vor- oder Rücklauftemperaturregelsystem in der diesem Zeitpunkt vorangehenden Zeitspanne zur Ermittlung der Proportionalitätskonstanten (K) in einem eingeschwungenen Zustand befindet.

2. Verfahren nach Anspruch 1, dadurch gekennzeichnet, daß jeweils zwei aufeinanderfolgende Zeitpunkte durch gleiche Zeitabstände getrennt sind.

3. Verfahren nach Anspruch 1, dadurch gekennzeichnet, daß die Zeitpunkte jeweils an den Augenblick der Unterschreitung eines Grenzwertes der Außentemperatur ($\vartheta_A$) gebunden sind.

4. Verfahren nach einem der Ansprüche 1 bis 3, dadurch gekennzeichnet, daß als Kriterium für das Vorliegen des eingeschwungenen Zustandes die Unterschreitung eines niedrigen Grenzwertes durch das Integral der Regeldifferenz ($\vartheta_{RI}$ -$\vartheta_{RS}$) der Raumtemperatur des temperaturbestimmenden Raumes dient.

5. Elektronische Schaltungsanordnung zur Durchführung des Verfahrens nach Anspruch 1, mit einem Differenzverstärker (1) zur Bildung der der Regeldifferenz ($\vartheta_{RS}$-$\vartheta_{RI}$) der Raumtemperatur des temperaturbestimmenden Raumes (Pilotraumes), proportionalen zweiten Größe (($\vartheta_{RS}$-$\vartheta_{RI}$) . V ), mit einem ersten Differenzwertbildner (2), dessen einem Eingang der einstellbare Festwert (P2) und dessen Subtraktionseingang der Außentemperaturwer $\vartheta_A$ zugeführt ist, und mit einem nachgeschalteten Multiplizierglied (3) dessem zweitem Multiplikationseingang die Proportionalitätskonstante (K) zugeführt ist, zur Bildung der dritten Größe (K . (P2-$\vartheta_A$)) sowie mit einem einstellbaren Gleichspannungsgeber zur Vorgabe der ersten Größe,(P1) wobei die drei Größen den Additionseingängen eines Summiergliedes(4) zugeführt sind, an dessen Ausgang der Sollwert, ($\vartheta_{VS}$) der Voroder Rücklauftemperatur zur Verfügung steht, dadurch gekennzeichnet, daß zusätzlich

a) ein weiterer Differenzwertbildner (7) vorgesehen ist, an dessen erstem Eingang der Sollwert der Vorlauftemperatur ($\vartheta_{VS}$) und an dessen zweitem Eingang das Ausgangssignal, (P1) des Gleichspannungsgebers ansteht,

b) ein Dividierglied (8) vorgesehen ist, dessen erster Eingang mit dem Ausgang des weiteren Differenzwertbildners (7) und dessen zweiter Eingang mit dem Ausgang des ersten Differenzwertbildners (2) verbunden ist,

c) ein triggerbarer elektronischer Speicher (9) für das Ausgangssignal (K = ($\vartheta_{VS}$ - P1) / (P2 -$\vartheta_A$)) des Dividiergliedes (8) vorgesehen ist, mit einem Übergabetakteingang (T), an den in konjunktiver Verknüpfung (11) das Ausgangssignal eines Zeitsignalgebers (12) und ein für den Einschwingungszustand des Vor- oder Rücklauftemperaturregelsystems (6) charakteristisches Signal geführt ist.

6. Schaltungsanordnung nach Anspruch 5 zur Durchführung des Verfahrens nach den Ansprüchen 2 und 3, dadurch gekennzeichnet, daß der Zeitsignalgeber (12) einen einstellbaren Taktgenerator (14) sowie ein Grenzwertglied (15), an dessen Eingang der Außentemperaturwert ($\vartheta_A$)

ansteht, aufweist, deren Ausgänge in disjunktiver Verknüpfung (16) den Ausgang des Zeitsignalgebers (12) bilden.

7. Schaltungsanordnung nach Anspruch 5 oder 6, zur Durchführung des Verfahrens nach Anspruch 4, dadurch gekennzeichnet, daß das für den Einschwingungszustand charakteristische Signal am Ausgang eines Funktionsgliedes (13) abgegriffen ist, das einen Integrator (17) sowie einen nachgeschalteten Grenzwertmelder (18) mit vorgegebenem niedrigen Grenzwert umfaßt und an den Ausgang des Differenzverstärkers (1) zur Bildung der der Regeldifferenz der Raumtemperatur des temperaturbestimmenden Raumes proportionalen zweiten Größe angeschlossen ist.

8. Schaltungsanordnung nach einem der Ansprüche 5 bis 7 zur Durchführung des Verfahrens nach den Ansprüchen 1 bis 4, dadurch gekennzeichnet, daß sie durch die Funktion eines Mikrocomputers realisiert ist.

## Claims:

1. A method of determining the theoretical value ($\theta_{VS}$) of the flow or return temperature for a flow or return temperature control system (6) of a central heating system with heat exchangers through which a fluid heat carrier flows in the rooms which are to be heated, where the theoretical value ($\theta_{VS}$) is determined as the sum of an adjustable constant first value (PI), a second value [($\theta_{RS} - \theta_{R1}$). V ] proportional to the control differenceof the room temperature of a temperature determining room (pilot room), and a third value formed from the product [K. (P2 - $\theta_A$)] of a proportionality constant (K) and the difference between an adjustable fixed value (P2) and the external temperature ($\theta_A$), characterised in that at specific instants in time the existing value of the proportionality constant (K) is replaced by an up-dated value in the form of the quotient [ ($\theta_{VS}$ 1)/(P2 $\theta_A$)] of a first difference value ($\theta_{VS}$ - PI) derived from the current theoretical value ($\theta_{VS}$) of the flow or return temperature and the constant first value (PI), and a second difference value (P2 - $\theta_A$), derived from the adjustable fixed value (P2) and the external temperature ($\theta_A$), if the flow or return temperature control system assumes a built-up state in the interval of time which precedes this instant for the determination of the proportionality constant (K).

2. A method as claimed in Claim 1, characterised in that each two consecutive time instants are separated by equal intervals of time.

3. A method as claimed in Claim 1, characterised in that the instants are each linked to the moment at which a limit value of external temperature ($\theta_A$) is undershot.

4. A method as claimed in one of Claims 1 to 3, characterised in that the undershooting of a low-limit value by the integral of the control difference

($\theta_{RI} - \theta_{RS}$) of the room temperature of the temperature-determining room serves as criterion for the existence of the built-up state.

5. An electronic circuit arrangement for the implementation of the method claimed in Claim 1, with a difference amplifier (1) for the formation of the second value [ ($\theta_{RS} - \theta_{R1}$).V ] proportional to the control difference ($\theta_{RS} - \theta_{RI}$) of the room temperature of the temperature-determining room (pilot room), with a first difference value forming device (2) whose first input is supplied with the adjustable fixed value (P2) and whose subtraction input is supplied with the external temperature value ($\theta_A$), a subsequently connected multiplier (3) whose second multiplication input is supplied with the proportionality constant (K) for the formation of the third value [K. (P2 - $\theta_A$) ] and with an adjustable d.c. voltage generator which serves to predetermine the first value (P1), where the three values are fed to the addition inputs of an adder (4) at whose output the theoretical value ($\theta_{VS}$) of the flow or return temperature is available, characterised in that in addition

a) a further difference value forming device (7) is provided at whose first input the theoretical value of the flow temperature ($\theta_{VS}$) occurs and at whose second input the output signal (P1) of the d.c. voltage generator occurs:

b) a divider (8) is provided whose first input is connected to the output of the further difference value-forming device (7) and whose second input is connected to the output of the first difference value -forming device (2); and

c) a triggerable electronic store (9) is provided for the output signal [ K = ($\theta_{VS}$ - P1)/(P2 - $\theta_A$) ] of the divider (8), with a transfer pulse clock input (T) supplied, in a conjunctive logic-link (11), with the output signal of a clock signal generator (12) and a signal characteristic of the built-up state of the flow or return temperature control system (6).

6. A circuit arrangement as claimed in Claim 5 for the implementation of the method claimed in Claims 2 and 3, characterised in that the clock signal generator (12) comprises an adjustable pulse generator (14) and a limit value component (15) at whose input the external temperature ($\theta_A$) occurs, and whose outputs form the output of the clock signal generator (12) in a disjunctive logic-link (16).

7. A circuit arrangement as claimed in Claim 5 or 6, for the implementation of the method claimed in Claim 4, characterised in that the signal characteristic of the built-up state is tapped from the output of a function component (13) which comprises an integrator (17) and a subsequently-connected limit value indicator (18) having a predetermined, low limit value, and is connected to the output of the difference amplifier (1) in order to form the second value proportional to the control difference of the room temperature of the temperature-determining room.

8. A circuit arrangement as claimed in one of Claims 5 to 7, for the implementation of the method claimed in Claims 1 to 4, <u>characterised in that</u> it uses the function of a micro-computer.

**Revendications**

1. Procédé pour déterminer la valeur de consigne ($\theta_V$) de la température d'arrivée ou de la température de retour pour un système (6) de réglage de la température d'arrivée ou de la température de retour d'une installation de chauffage central comportant des échangeurs de chaleur parcourus par un fluide caloporteur et placés dans les pièces devant être chauffées, la valeur de consigne ($\theta_{VS}$) étant déterminée sous la forme d'une somme d'une première grandeur constante réglable (PI), d'une seconde grandeur (($\theta_{RS} - \theta_{RI}$).V), proportionnelle à la différence de réglage de la température ambiante d'une pièce (piéce pilote) déterminant la température et d'une troisiéme grandeur formée par le produit (K.(P2 - $\theta_A$)) d'une constante de proportionnalité (K) par la différence entre une valeur fixe réglable (P2) et la température extérieure ($\theta_A$), caractérisé par le fait qu'à des instants déterminés, la valeur jusqu'alors présente de la constante de proportionnalité (K) est remplacée par une valeur actuelle sous la forme d'un coefficient (($\theta_{VS}$ - PI)/ (P2 - $\theta_A$)) d'une première valeur de différence ($\theta_{VS}$ PI), formée à partir de la valeur de consigne actuelle ($\theta_{VS}$) de la température d'arrivée ou de la température de retour et de la première grandeur constante (PI), par une seconde valeur de différence (P2 - $\theta_A$) formée à partir de la valeur fixe réglable (P2) et de la température extérieure ($\theta_A$), lorsque le systéme de réglage de la température d'arrivée ou de la température de retour se situe dans un état stationnaire pendant l'intervalle de temps qui précède cet instant, pour la détermination de la constante de proportionnalité (K).

2. Procédé suivant la revendication 1, caractérisé par le fait que deux instants successifs respectifs sont séparés par des intervalles de temps identiques.

3. Procédé suivant la revendication 1, caractérisé par le fait que les instants sont liés respectivement à l'instant où la température ($\theta_A$) tombe en dessous d'une valeur limite.

4. Procédé suivant l'une des revendications 1 à 3, caractérisé par le fait qu'on utilise, comme critère de la présence de l'état stationnaire, le fait que l'intégrale de la différence de réglage ($\theta_{TI}$ - $\theta_{RS}$) de la température ambiante de la salle déterminant la température tombe audessous d'une valeur limite faible.

5. Montage électronique pour la mise en oeuvre du procédé suivant la revendication 1, comportant un amplificateur différentiel (1) servant à former la seconde grandeur (($\theta_{RS}$ - $\theta_{RI}$).V), qui est proportionnelle à la différence de réglage ($\theta_{RS}$ - Wpl) de la température ambiante de la pièce (piéce pilote) déterminant la température, un premier dispositif (2) de formation d'une valeur de différence, à une entrée duquel la valeur fixe réglable ($p_2$) est envoyée et à l'entrée de soustraction duquel la valeur ($\theta_A$) de la température extérieure est envoyée, et un circuit multiplicateur (3) branché en aval et à la seconde entrée de multiplication duquel la constante de proportionnalité (K) est envoyée, pendant la formation de la troisième grandeur (K. (P2 - $\theta_A$)), ainsi qu'un générateur réglable de tension continue servant à prédéterminer la première grandeur (PI), et selon lequel les trois grandeurs sont envoyées aux entrées d'addition d'un circuit de sommation (4), à la sortie duquel est disponible la valeur de consigne ($\theta_{VS}$) de la température d'arrivée ou de la température de départ, caractérisé par le fait qu'en outre:

a) il est prévu un autre circuit (7) de formation de la valeur de différence, à la première entrée duquel est appliquée la valeur de consigne de la température d'arrivée ($\theta_{VS}$) et à la seconde entrée duquel est appliqué le signal de sortie (PI) du générateur de tension continue,

b) il est prévu un circuit diviseur (8) dont la premiére entrée est reliée à la sortie d'un autre circuit (7) de formation de la valeur de différence et dont la seconde entrée est reliée à la sortie du premier circuit (2) de formation de la valeur de différence,

c) il est prévu une mémoire électronique déclenchable (9) pour le signal de sortie (K = ($\theta_{VS}$ - PI)/(p2 -$\theta_A$)) du circuit diviseur (8), comportant une entrée (T) de la cadence de transfert, à laquelle sont envoyés, selon une combinaison ET logique (11), le signal de sortie d'un générateur de signaux temporels (12) et un signal caractéristique de l'état stationnaire du système (6) de régulation de la température d'arrivée ou de la température de retour.

6. Montage suivant la revendication 5, pour la mise en oeuvre du procédé suivant les revendications 2 et 3, caractérisé par le fait que le générateur de signaux temporels (12) comporte un générateur de cadence réglable (14) ainsi qu'un circuit à valeur de seuil (15), à l'entrée duquel est appliquée la valeur ($\theta_A$) de la température extérieure et dont les sorties forment, en étant réunies selon une combinaison OU logique (16), la sortie du générateur de signaux temporels (12).

7. Montage suivant la revendiation 5 ou 6, pour la mise en oeuvre du procédé suivant la revendication 4, caractérisé par le fait que le signal caractéristique de l'état stationnaire est prélevé sur la sortie d'un circuit générateur de fonction (13), qui comporte un intégrateur (17) ainsi qu'un transmetteur de valeur limite (18) branché en aval et qui contient une valeur limite faible prédéterminée, et est raccordé à la sortie de l'amplificateur différentiel (1) pour former la seconde grandeur proportionnelle à la différence de réglage de la température ambiante de la pièce déterminant la température.

8. Montage suivant l'une des revendications 5 à 7 pour la mise en oeuvre du procédé suivant les revendications à 4, caractérisé par le fait qu'il est réalisé au moyen de la fonction d'un microordinateur.

$\vartheta_{VI}$    6    5

$\vartheta_{VS}$

13   18   17   4   P1

$(\vartheta_{RS}-\vartheta_{RI})\cdot V$

$K(P2-\vartheta_{A})$

3   $\times$   K

1   2   $P2-\vartheta_{A}$

$\vartheta_{RI}$   $\vartheta_{RS}$   $\vartheta_{A}$   P2

P1   $\vartheta_{VS}$   7

8

$K=\dfrac{\vartheta_{VS}-P1}{P2-\vartheta_{A}}$

10   9   T

11   &

12   L

14   16   =1   15   $\vartheta_{A}$

1